# FASCICULE DE BREVET EUROPEEN

(11) **EP 4 494 968 B1**
(45) Date de publication et mention de la délivrance du brevet: **05.11.2025**
(21) Numéro de dépôt: 24189059.9
(22) Date de dépôt: 17.07.2024
(51) Int. Cl.: B61D 27/00, B60H 1/00

(54) **HABITACLE VENTILÉ ASSURANT UN DÉBIT D'AIR CONSTANT**
BELÜFTETER INNENRAUM MIT KONSTANTEM LUFTSTROM
VENTILATED CABIN PROVIDING A CONSTANT AIR FLOW

(30) Priorité: 17.07.2023 FR 2307619
(43) Date de publication de la demande: 22.01.2025
(73) Titulaire: SpeedInnov, 75008 Paris (FR)
(72) Inventeur: PIAT, Laurent, 17180 PERIGNY (FR)
(74) Mandataire: Plasseraud IP

(56) Documents cités:
- EP-A1- 3 156 302
- WO-A1-2018/189487
- WO-A1-2021/180260

## Description

La présente invention concerne un habitacle ventilé assurant un débit d'air constant, du type comportant un espace ventilé intérieur et un dispositif de ventilation, dans lequel l'habitacle ventilé comporte au moins un circuit d'air en boucle fermée défini au travers du dispositif de ventilation et de l'espace ventilé intérieur et le dispositif de ventilation comporte un ventilateur de mise en mouvement de l'air dans le circuit d'air en boucle fermée et une unité de commande de la vitesse du ventilateur, l'unité de commande étant propre à faire varier la vitesse du ventilateur pour assurer un débit de consigne constant.

Pour assurer le confort de passagers au sein d'un habitacle, le débit d'air et la température intérieure sont des facteurs importants. Ces paramètres sont testés régulièrement et modifiés au cours d'une intervention en cas de défaut notable. Les défauts pouvant apparaître sont l'endommagement d'un équipement comme un ventilateur ou l'encrassement d'un filtre.

Les dispositifs de chauffage, ventilation et climatisation sont vérifiés sur les trains à l'état neuf au moment où tous les filtres sont propres et aucun défaut n'est encore apparu dans le système. Mais avant la prochaine intervention, les filtres ont le temps de s'encrasser ou le système de se détériorer et alors le confort passager baisse.

Une solution est décrite par exemple dans le document EP3156302B1.

Sur la figure 2 du document EP3156302B1, le dispositif de climatisation est composé d'un circuit d'air passant par un filtre et un ventilateur. Des capteurs de débit et de températures transmettent des informations sur l'état de l'air à une unité de contrôle. L'unité de contrôle supervise l'échangeur thermique et le ventilateur à partir des informations reçues sur la température et le débit.

Le débit est adapté en fonction de l'encrassement du filtre observé par la différence entre la mesure du capteur de débit et une valeur cible. Le débit et la température sont alors ajustés pour assurer le confort du passager.

Toutefois ce dispositif doit être calibré et mis au point afin de déterminer la position précise des capteurs de débit afin d'avoir des mesures représentatives de l'encrassement global du filtre. En effet, une position inappropriée des capteurs présente le risque de remonter une information erronée qui impliquera donc un réglage de débit incorrect conduisant à un inconfort pour les passagers.

L'invention a pour but de proposer un habitacle ventilé comportant un dispositif de ventilation plus fiable, permettant d'améliorer le confort des passagers.

A cet effet, l'invention a pour objet un habitacle ventilé avec les caracteristiques techniques de la revendication 1.

Suivant des modes particuliers de réalisation, l'habitacle comporte l'une ou plusieurs des caractéristiques suivantes :
- Le dispositif de ventilation comporte au moins un filtre dans le circuit d'air en boucle fermée.
- Le capteur de mesure de la différence de pression est propre à mesurer cette différence de pression entre l'entrée et la sortie du ventilateur du dispositif de ventilation.
- L'unité de commande comporte une mémoire stockant des courbes de fonctionnement du ventilateur donnant la différence de pression entre les mêmes deux points de mesure du circuit d'air en boucle fermée en fonction du débit d'air pour différentes vitesses constantes de rotation du ventilateur et des courbes caractéristiques du circuit donnant la différence de pression entre les mêmes deux points de mesure du circuit d'air en boucle fermée en fonction du débit d'air imposé par le ventilateur pour différents états de fonctionnement du dispositif de ventilation.
- L'unité de commande est propre à, lorsque la différence de pression mesurée varie au-delà d'une plage de variation prédéterminée depuis une valeur de différence de pression de référence :
   - définir la courbe caractéristique du circuit correspondant à l'état de fonctionnement actuel qui, pour la différence de pression mesurée donne un débit théorique égal au débit donné par la courbe de fonctionnement actuelle du ventilateur correspondant à la vitesse actuelle pour la différence de pression mesurée ; puis
   - définir la courbe de fonctionnement cible du ventilateur correspondant à une vitesse cible qui, pour le débit de consigne donne une différence de pression cible égale à la différence de pression donnée par la courbe caractéristique actualisée du circuit correspondant à l'état de fonctionnement actuel pour le débit de consigne ; puis
   - fixer la valeur de la différence de pression de référence à la valeur donnée par la courbe de fonctionnement cible du ventilateur pour la vitesse cible pour le débit de consigne ; puis fixer la vitesse actuelle de rotation du ventilateur à la vitesse cible correspondant à la courbe de fonctionnement cible du ventilateur.
   - L'espace ventilé fait partie d'un véhicule ferroviaire.

L'invention a également pour objet un procédé de ventilation d'un habitacle ventilé selon la revendication 6.

Suivant des modes particuliers de réalisation, le procédé comporte l'une ou plusieurs des caractéristiques suivantes :
- L'unité de commande comporte une mémoire stockant des courbes de fonctionnement du ventilateur donnant la différence de pression entre les mêmes deux points de mesure du circuit d'air en boucle fermée en fonction du débit d'air pour différentes vitesses constantes de rotation du ventilateur et des courbes caractéristiques du circuit donnant la différence de pression entre les mêmes deux points de mesure du circuit d'air en boucle fermée en fonction du débit d'air imposé par le ventilateur pour différents états de fonctionnement du dispositif de ventilation et caractérisé en ce que, lorsque la différence de pression mesurée varie au-delà d'une plage de variation prédéterminée depuis une valeur de différence de pression de référence, le procédé comporte les étapes de :
   - définir la courbe caractéristique du circuit correspondant à l'état de fonctionnement actuel qui, pour la différence de pression mesurée donne un débit théorique égal au débit donné par la courbe de fonctionnement actuelle du ventilateur correspondant à la vitesse actuelle pour la différence de pression mesurée ; puis
   - définir la courbe de fonctionnement cible du ventilateur correspondant à une vitesse cible qui, pour le débit de consigne donne une différence de pression cible égale à la différence de pression donnée par la courbe caractéristique actualisée du circuit correspondant à l'état de fonctionnement actuel pour le débit de consigne ; puis

   - fixer la valeur de la différence de pression de référence à la valeur donnée par la courbe de fonctionnement cible du ventilateur pour la vitesse cible pour le débit de consigne ; puis
   - fixer la vitesse actuelle de rotation du ventilateur à la vitesse cible correspondant à la courbe de fonctionnement cible du ventilateur.

L'invention sera mieux comprise à la lecture de la description qui va suivre, donnée uniquement à titre d'exemple et faite en se référant aux dessins sur lesquels :
- [Fig 1] la figure 1 est une vue schématique de l'habitacle ventilé ;
- [Fig 2] la figure 2 est un graphique regroupant des courbes de fonctionnement et des courbes caractéristiques de l'habitacle ventilé ;
- [Fig 3] la figure 3 est un organigramme des étapes de fonctionnement de l'habitacle ventilé.

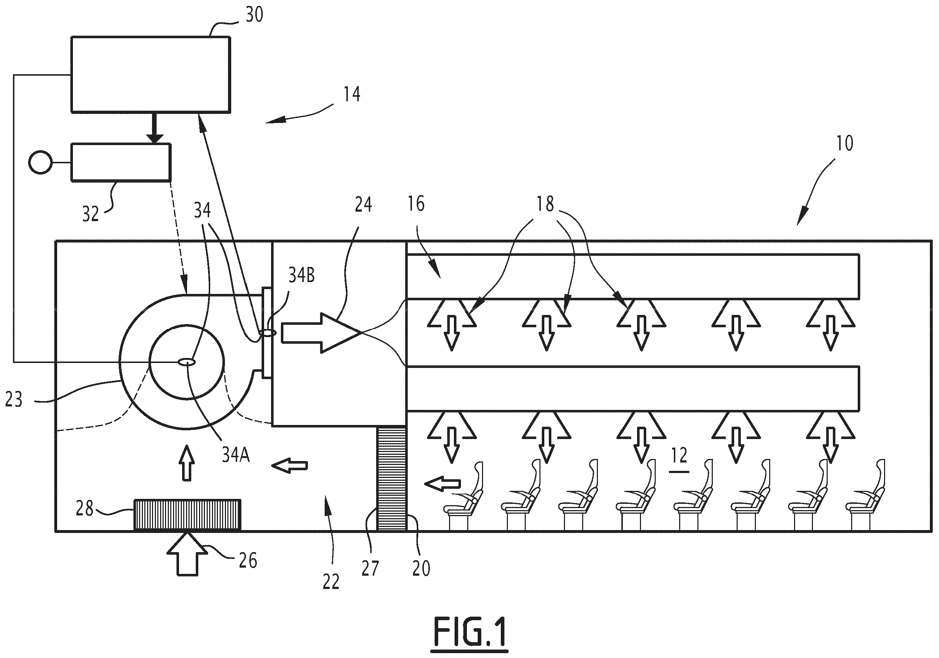

La figure 1 montre un habitacle ventilé 10 à l'intérieur d'un véhicule, notamment un véhicule ferroviaire. L'habitacle ventilé 10 comporte un espace ventilé intérieur 12, adapté pour accueillir des passagers, et un dispositif 14 de ventilation de cet espace.

Le dispositif de ventilation 14 est relié en sortie à l'espace ventilé intérieur 12 par des conduits d'aération 16 munis de sorties d'aération 18. Les sorties d'aération 18 sont ménagées selon la longueur des conduits d'aération 16.

Le dispositif de ventilation 14 est également relié en entrée à l'espace ventilé intérieur 12 par une entrée d'aération 20. Dans ce mode de réalisation, l'entrée d'aération 20 est prolongée par un canal d'aération 22.

Le dispositif de ventilation 14 comporte un ventilateur 23 de mise en mouvement de l'air de son entrée 20 vers ses sorties 18. Le ventilateur 23 est avantageusement un moto-ventilateur ou plus particulièrement un moto-ventilateur à fréquence variable intégrée.

Dans un autre mode de réalisation, le dispositif de ventilation 14 comprend un compresseur à fréquence variable intégrée.

L'habitacle ventilé 10 définit ainsi un circuit d'air en boucle fermée 24 passant par le dispositif de ventilation 14 et l'espace ventilé intérieur 12. Suivant ce circuit d'air en boucle fermée, l'air est injecté par les sorties 18 dans l'espace 12 dont il ressort par l'entrée 20 pour pénétrer dans le dispositif de ventilation 14 où il circule par le canal 22 jusqu'au ventilateur 23 qui réinjecte l'air dans les conduits 16.

Avantageusement un système de réfrigération et/ou de chauffage est intégré dans le circuit 24 dans le dispositif de ventilation 14.

Le dispositif de ventilation 14 comporte une entrée d'air neuf 26. L'entrée d'air neuf 26 débouche dans le canal 22 en amont du ventilateur 23 et en aval de l'entrée 20. L'entrée d'air neuf 26 est notamment en communication avec l'extérieur du véhicule ferroviaire.

Le ventilateur 23 est donc alimenté, d'une part, depuis l'entrée d'air frais 26 et, d'autre part, depuis l'entrée d'aération 20 en communication avec l'espace ventilé 12.

Le dispositif de ventilation 14 comporte au moins un filtre 27 dans le circuit d'air en boucle fermée 24. Le filtre 27 est positionné par exemple au niveau de l'entrée d'aération 20. Un filtre 28 est également positionné avantageusement au niveau de l'entrée d'air neuf 26.

Chaque filtre 27, 28 est en un matériau limitant le passage de certaines particules, notamment de particules de poussière. Le filtre 27 est un des principaux responsables de l'encrassement du dispositif de ventilation 14.

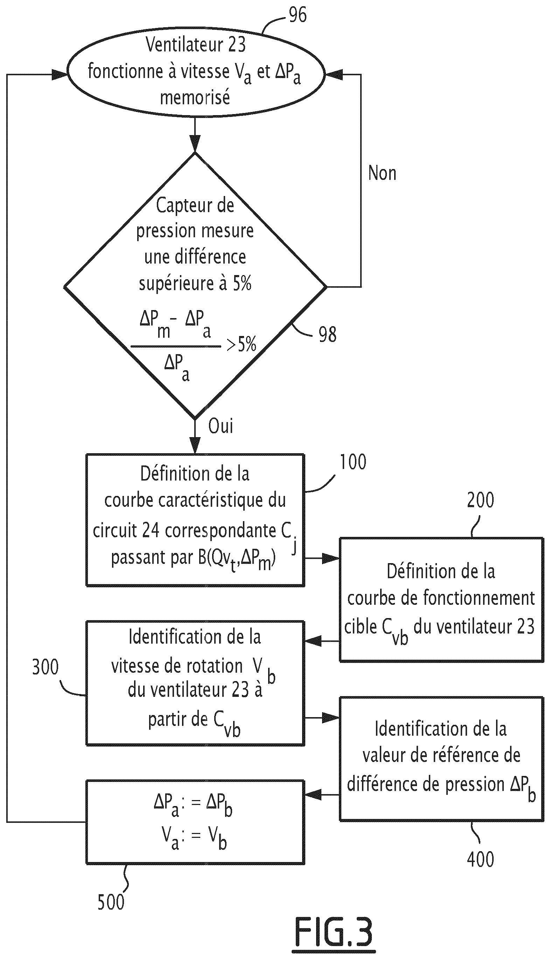

Le ventilateur 23 est relié électriquement à une unité 30 de commande de la vitesse du ventilateur 23. L'unité de commande 30 comporte une mémoire de stockage et un microprocesseur propre à mettre en œuvre l'algorithme qui sera décrit ultérieurement en regard de la figure 3.

Le dispositif de ventilation 14 comporte également un convertisseur électrique 32 connecté électriquement entre l'unité de commande 30 et le ventilateur 23 permettant à l'unité de commande 30 de commander la vitesse de rotation du ventilateur 23.

Le dispositif de ventilation 14 comporte un capteur 34 de mesure de la différence de pression ΔPₘ entre deux points du circuit d'air en boucle 24. Le capteur 34 de mesure est connecté à l'unité de commande 30.

Le capteur 34 de différence de pression comporte par exemple deux sondes de pression 34A et 34B placées respectivement à l'entrée et la sortie du ventilateur 23 et un soustracteur de calcul de la différence entre les valeurs obtenues par les sondes 34A, 34B.

L'unité de commande 30 est propre à définir et imposer la vitesse du ventilateur 23 par l'intermédiaire du convertisseur 32. L'unité de commande 30 est propre à définir la vitesse du ventilateur 23 pour assurer un débit de consigne Qv_{c} constant, en fonction de la mesure de la différence de pression mesurée ΔPₘ mesurée par le capteur 34.

Lorsque la différence de pression mesurée ΔPₘ varie au-delà d'une plage de variation prédéterminée depuis une valeur de différence de pression de référence ΔPₐ, l'unité de commande 30 est propre à déterminer une nouvelle vitesse de rotation du ventilateur 23 assurant le débit de consigne Qv_{c}, constant.

Dans un mode de réalisation, la plage de variation prédéterminée est de l'ordre de 5%. En effet, il convient de définir une plage suffisamment précise pour adapter le débit de façon pertinente sans toutefois être trop fin ce qui engendrerait des adaptations trop rapprochées du débit. Cela conduirait à sursolliciter le ventilateur 23 et donc à diminuer sa durée de vie.

La mémoire de l'unité de commande 30 comporte des courbes Cᵥₐ, C_{vb} de fonctionnement du ventilateur 23 exprimant la différence de pression ΔP entre l'entrée et la sortie du ventilateur en fonction du débit d'air Qv pour une vitesse constante de rotation du ventilateur 23.

La mémoire comporte également des courbes Cᵢ, Cⱼ caractéristiques du circuit 24 exprimant la différence de pression ΔP mesurée entre l'entrée et la sortie du ventilateur 23 en fonction du débit d'air Qv pour un même état de fonctionnement du circuit 24.

Un état de fonctionnement du dispositif de ventilation 14 est caractérisé par l'état de l'usure ou de l'encrassement au niveau de l'ensemble du circuit d'air 24.

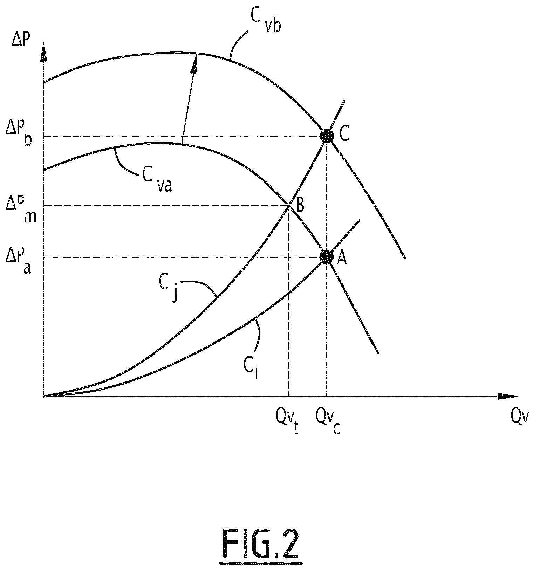

La figure 2 présente des exemples de courbes stockées dans la mémoire de l'unité de commande 30. Le graphique représente la différence de pression ΔP entre l'entrée et la sortie du ventilateur en fonction du débit Qv, le débit Qv étant variable du fait de la variation de vitesse du ventilateur et de l'état de fonctionnement du circuit. Les courbes de fonctionnement Cᵥₐ, C_{vb} du ventilateur 23 correspondent à une vitesse constante respectivement Vₐ et V_{b} et les courbes caractéristiques Cᵢ, Cⱼ du circuit 24 correspondent chacune à un état de fonctionnement durable i, j.

Ces courbes sont obtenues expérimentalement par des mesures effectuées sur le circuit après la fabrication de l'habitacle ventilé et sur le ventilateur avant montage.

Un procédé d'exploitation de l'habitacle ventilé 10 est maintenant décrit en regard de la figure 3.

Le capteur 34 de mesure de la différence de pression fournit des informations sur la différence de pression à l'unité de commande 30.

Le capteur 34 de mesure fonctionne en continu et fournit de nouvelles valeurs de différence de pression à une fréquence prédéterminée.

A partir des courbes de fonctionnement du ventilateur 23 et des courbes caractéristiques du circuit 24 stockées dans la mémoire de l'unité de commande 30, l'unité de commande 30 ajuste la vitesse du ventilateur 23 à une vitesse cible.

Ces ajustements se font seulement lorsque la différence de pression mesurée ΔPₘ sort de la plage de variation prédéterminée de sorte que des phases de fonctionnement successives se succèdent, pendant chacune desquelles le ventilateur 23 est commandé pour tourner à une vitesse Vₐ constante propre à la phase considérée et avec une différence de pression de référence ΔPₐ constante.

Le terme « actuel » caractérise les éléments à l'instant présent lors du déroulé du procédé dans la phase actuelle. Le terme « cible » correspond aux éléments dans la phase suivante.

On suppose comme indiqué à l'étape 96, que le ventilateur 23 tourne à la vitesse constante Vₐ sous la commande de l'unité de commande 30 et la différence de pression de référence ΔPₐ est mémorisée.

La vitesse Vₐ a été définie à partir des courbes Cᵢ et Cᵥₐ mémorisées, qui conduisaient au début de la phase actuelle à un débit de consigne Qv_{c}, pour une différence de pression de référence ΔPₐ comme illustré par le point A sur la figure 2.

A l'étape 98, l'écart entre la différence de pression mesurée ΔPₘ et la différence de pression de référence actuelle ΔPₐ est comparé à la différence de pression de référence ΔPₐ.

Tant que la différence de pression actuelle mesurée ΔPₘ est contenue dans une plage de variation prédéterminée autour de la valeur de référence de différence de pression ΔPₐ, et en particulier que la différence de pression mesurée ΔPₘ présente une augmentation de moins de 5% par rapport à la valeur de référence de différence de pression ΔPₐ, le ventilateur 23 maintient sa vitesse de rotation.

Lorsque la différence de pression mesurée ΔPₘ sort de la plage de variation prédéterminée dépendant de la valeur de référence de différence de pression ΔPₐ, et en particulier que la différence de pression mesurée ΔPₘ présente une augmentation de plus de 5% par rapport à la valeur de référence de différence de pression ΔPₐ, l'unité de commande 30 effectue successivement les étapes suivantes illustrées sur la figure 3.

A l'étape 100 la définition de la courbe caractéristique Cⱼ du circuit 24 correspondant à l'état de fonctionnement de référence actuel est réalisée. A cet effet, un point B est défini sur la courbe de fonctionnement actuel Cᵥₐ correspondant à la vitesse de rotation du ventilateur Vₐ. Le point B est le point de la courbe de fonctionnement actuelle Cᵥₐ correspondant à la différence de pression actuelle mesurée ΔPₘ.

Le point B représente un état intermédiaire dans lequel le dispositif de ventilation 14 fonctionne à un débit théorique Qvₜ.

La courbe caractéristique dite actualisée Cⱼ définie à l'étape 100 est la courbe caractéristique mémorisée passant par le point B ou la courbe caractéristique la plus proche du point B qui pour la différence de pression mesurée ΔPₘ donne un débit théorique Qvₜ égal au débit donné par la courbe de fonctionnement actuelle Cᵥₐ du ventilateur 23 correspondant à la vitesse actuelle Vₐ pour la différence de pression mesurée ΔPₘ.

A l'étape 200, une courbe de fonctionnement cible C_{vb} du ventilateur 23 est définie. A cet effet, le point de fonctionnement C est défini sur la courbe caractéristique actualisée Cⱼ pour le débit de consigne Qv_{c}. La courbe de fonctionnement cible C_{vb} définie est la courbe de fonctionnement mémorisée qui passe par le point C ou la courbe de fonctionnement la plus proche du point C.

La courbe de fonctionnement cible C_{vb} correspond ainsi à la vitesse cible V_{b} qui, pour le débit de consigne Qv_{c}, donne une différence de pression cible ΔP_{b} égale à la différence de pression donnée par la courbe caractéristique actualisée du circuit Cⱼ correspondant à l'état de fonctionnement actuel pour le débit de consigne Qv_{c}.

A l'étape 300, la vitesse cible V_{b} de rotation du ventilateur 23 correspondant à la courbe de fonctionnement cible C_{vb} du ventilateur est identifiée à partir des informations stockées dans la mémoire de l'unité de commande 30.

A l'étape 400, la différence de pression cible ΔP_{b} correspondant à la valeur donnée par la courbe de fonctionnement cible C_{vb} du ventilateur 23 pour la vitesse cible V_{b} et pour le débit de consigne Qv_{c} est identifiée.

A l'étape 500 une actualisation des informations contenues dans la mémoire de l'unité de commande 30 est réalisée.

La valeur de référence de la différence de pression ΔPₐ dans la mémoire de l'unité de commande 30 est actualisée est remplacée par la valeur de la différence de pression cible ΔP_{b} correspondant à la valeur donnée par la courbe de fonctionnement cible C_{vb} pour le débit de consigne Qv_{c}.

La valeur de la vitesse actuelle Vₐ de rotation du ventilateur 23 dans la mémoire de l'unité de commande 30 est également actualisée est remplacée par la valeur de la vitesse cible V_{b} correspondant à la courbe de fonctionnement cible C_{vb} du ventilateur 23.

L'unité de commande 30 commande alors la rotation du ventilateur 23 à la nouvelle vitesse actuelle Vₐ à l'étape 96.

L'habitacle ventilé 10 présente comme avantage d'assurer en permanence un débit constant permettant un confort passager.

La mesure de pression aux bornes du ventilateur 23 permet de surveiller l'ensemble du circuit d'air en limitant les perturbations extérieures.

La mise en place de ce système garantira un confort passager optimum. En effet, le débit d'air soufflé restera constant évitant la perte de débit, ce qui évitera de compenser la perte de débit par des variations de température de soufflage. Les gradients de température ne seront donc pas dégradés au fur et à mesure du temps. De plus, en cas de perte de charge importante, la perte de débit pourrait ne plus être compensée par l'ajustement de la température de soufflage, ce qui réduirait la puissance disponible et conduirait donc à une dérive de la température intérieure moyenne s'éloignant ainsi de la température idéale créant de l'inconfort, contrairement au système décrit précédemment.

## Revendications

1. Habitacle ventilé (10) comportant un espace ventilé intérieur (12) et un dispositif de ventilation (14), dans lequel l'habitacle ventilé (10) comporte au moins un circuit d'air en boucle fermée (24) défini au travers du dispositif de ventilation (14) et de l'espace ventilé intérieur (12) et dans lequel le dispositif de ventilation (14) comporte un ventilateur (23) de mise en mouvement de l'air dans le circuit d'air en boucle fermée (24) et une unité de commande (30) de la vitesse du ventilateur (23), l'unité de commande (30) étant propre à faire varier la vitesse du ventilateur (23) pour assurer un débit de consigne (Qv_{c},) constant, **caractérisé en ce que** le dispositif de ventilation (14) comporte un capteur (34) de mesure d'une différence de pression (ΔPₘ) entre deux points de mesure du circuit d'air en boucle fermée (24), l'unité de commande (30) étant propre à fixer la vitesse du ventilateur (23) en fonction de la mesure de différence de pression (ΔPₘ)
et **en ce que** l'unité de commande (30) comporte une mémoire stockant des courbes de fonctionnement du ventilateur (23) donnant la différence de pression entre les mêmes deux points de mesure du circuit d'air en boucle fermée (24) en fonction du débit d'air pour différentes vitesses constantes de rotation du ventilateur (23) et des courbes caractéristiques du circuit (24) donnant la différence de pression entre les mêmes deux points de mesure du circuit d'air en boucle fermée (24) en fonction du débit d'air imposé par le ventilateur (23) pour différents états de fonctionnement du dispositif de ventilation (14).

2. Habitacle ventilé (10) selon la revendication 1, dans lequel le dispositif de ventilation (14) comporte au moins un filtre (27) dans le circuit d'air en boucle fermée (24).

3. Habitacle ventilé (10) selon l'une quelconque des revendications précédentes, dans lequel le capteur (34) de mesure de la différence de pression est propre à mesurer cette différence de pression (ΔPₘ) entre l'entrée et la sortie du ventilateur (23) du dispositif de ventilation (14).

4. Habitacle ventilé (10) selon l'une quelconque des revendications précédentes, dans lequel l'unité de commande (30) est propre à, lorsque la différence de pression mesurée (ΔPₘ) varie au-delà d'une plage de variation prédéterminée depuis une valeur de différence de pression de référence (ΔPₐ) :
- définir la courbe caractéristique (Cⱼ) du circuit (24) correspondant à l'état de fonctionnement actuel qui, pour la différence de pression mesurée (ΔPₘ) donne un débit théorique (Qvt) égal au débit donné par la courbe de fonctionnement actuelle (Cᵥₐ) du ventilateur (23) correspondant à la vitesse actuelle (Vₐ) pour la différence de pression mesurée (ΔPₘ) ; puis
- définir la courbe de fonctionnement cible (C_{vb}) du ventilateur (23) correspondant à une vitesse cible (V_{b}) qui, pour le débit de consigne (Qv_{c},) donne une différence de pression cible (AP_{b}) égale à la différence de pression donnée par la courbe caractéristique actualisée (Cⱼ) du circuit (24) correspondant à l'état de fonctionnement actuel pour le débit de consigne (Qv_{c}) ; puis
- fixer la valeur de la différence de pression de référence à la valeur (AP_{b}) donnée par la courbe de fonctionnement cible (C_{vb}) du ventilateur (23) pour la vitesse cible (V_{b}) pour le débit de consigne (Qv_{c}) ; puis
- fixer la vitesse actuelle de rotation du ventilateur (23) à la vitesse cible (V_{b}) correspondant à la courbe de fonctionnement cible (C_{vb}) du ventilateur (23).

5. Habitacle ventilé (10) selon l'une quelconque des revendications précédentes, dans lequel l'espace ventilé (12) fait partie d'un véhicule ferroviaire.

6. Procédé de ventilation d'un habitacle ventilé (10) comportant un espace ventilé intérieur (12) et un dispositif de ventilation (14), dans lequel l'habitacle ventilé (10) comporte au moins un circuit d'air en boucle fermée (24) défini au travers du dispositif de ventilation (14) et de l'espace ventilé intérieur (12) et dans lequel le dispositif de ventilation (14) comporte un ventilateur (23) de mise en mouvement de l'air dans le circuit d'air en boucle fermée (24), et dans lequel l'unité de commande (30) comporte une mémoire stockant des courbes de fonctionnement du ventilateur (23) donnant la différence de pression entre les mêmes deux points de mesure du circuit d'air en boucle fermée (24) en fonction du débit d'air pour différentes vitesses constantes de rotation du ventilateur (23) et des courbes caractéristiques du circuit (24) donnant la différence de pression entre les mêmes deux points de mesure du circuit d'air en boucle fermée (24) en fonction du débit d'air imposé par le ventilateur (23) pour différents états de fonctionnement du dispositif de ventilation (14), le procédé comportant les étapes de :
- faire varier la vitesse du ventilateur (23) pour assurer un débit de consigne (Qv_{c}) constant depuis une unité de commande (30) de la vitesse du ventilateur (23), **caractérisé en ce que** le procédé comprend les étapes suivantes :
- mesurer une différence de pression (ΔPₘ) entre deux points de mesure du circuit d'air en boucle fermée (24) ; et
- fixer la vitesse du ventilateur (23) en fonction de la mesure de différence de pression (ΔPₘ).

7. Procédé de ventilation selon la revendication 6, **caractérisé en ce que**, lorsque la différence de pression mesurée (ΔPₘ) varie au-delà d'une plage de variation prédéterminée depuis une valeur de différence de pression de référence (ΔPₐ), le procédé comporte les étapes de :
- définir la courbe caractéristique (Cⱼ) du circuit (24) correspondant à l'état de fonctionnement actuel qui, pour la différence de pression mesurée (ΔPₘ) donne un débit théorique (Qvt) égal au débit donné par la courbe de fonctionnement actuelle (Cᵥₐ) du ventilateur (23) correspondant à la vitesse actuelle (Vₐ) pour la différence de pression mesurée (ΔPₘ) ; puis
- définir la courbe de fonctionnement cible (C_{vb}) du ventilateur (23) correspondant à une vitesse cible (V_{b}) qui, pour le débit de consigne (Qv_{c},) donne une différence de pression cible (AP_{b}) égale à la différence de pression donnée par la courbe caractéristique actualisée (Cⱼ) du circuit (24) correspondant à l'état de fonctionnement actuel pour le débit de consigne (Qv_{c}) ; puis
- fixer la valeur de la différence de pression de référence à la valeur (AP_{b}) donnée par la courbe de fonctionnement cible (C_{vb}) du ventilateur (23) pour la vitesse cible (V_{b}) pour le débit de consigne (Qv_{c}) ; puis
- fixer la vitesse actuelle de rotation du ventilateur (23) à la vitesse cible (V_{b}) correspondant à la courbe de fonctionnement cible (C_{vb}) du ventilateur (23).

## Patentansprüche

1. Belüftete Kabine (10), die einen belüfteten Innenraum (12) und eine Belüftungsvorrichtung (14) aufweist, wobei die belüftete Kabine (10) mindestens einen die Belüftungsvorrichtung (14) und den belüfteten Innenraum (12) durchquerenden, zur Schleife geschlossenen Luftkreislauf (24) aufweist, und wobei die Belüftungsvorrichtung (14) einen Ventilator (23) zum Umwälzen der Luft in dem zur Schleife geschlossenen Luftkreislauf (24) und eine die Drehzahl des Ventilators (23) steuernde Steuereinheit (30) aufweist, wobei die Steuereinheit (30) fähig ist, die Drehzahl des Ventilators (23) zu variieren, um einen konstanten Solldurchfluss (Qv_{c}) sicherzustellen,
**dadurch gekennzeichnet, dass** die Belüftungsvorrichtung (14) einen Sensor (34) zum Messen einer Druckdifferenz (ΔPₘ) zwischen zwei Messpunkten des zur Schleife geschlossenen Luftkreislaufs (24) aufweist, wobei die Steuereinheit (30) fähig ist, die Drehzahl des Ventilators (23) als Funktion der gemessenen Druckdifferenz (ΔPₘ) festzusetzen,
und dadurch, dass die Steuereinheit (30) einen Speicher aufweist, in dem gespeichert sind:
Betriebskennlinien des Ventilators (23), die die Druckdifferenz zwischen den selbigen zwei Messpunkten des zur Schleife geschlossenen Luftkreislaufs (24) als Funktion des Luftdurchflusses für unterschiedliche konstante Drehzahlen des Ventilators (23) repräsentieren, und
charakteristische Kennlinien des Kreislaufs (24), die die Druckdifferenz zwischen den selbigen zwei Messpunkten des zur Schleife geschlossenen Luftkreislaufs (24) als Funktion des von dem Ventilator (23) aufgezwungenen Luftdurchflusses für unterschiedliche Betriebszustände der Belüftungsvorrichtung (14) repräsentieren.

2. Belüftete Kabine (10) nach Anspruch 1, in welcher die Belüftungsvorrichtung (14) mindestens einen Filter (27) in dem zur Schleife geschlossenen Luftkreislauf (24) aufweist.

3. Belüftete Kabine (10) nach einem der vorstehenden Ansprüche, in welcher der Sensor (34) zum Messen der Druckdifferenz fähig ist, diese Druckdifferenz (ΔPₘ) zwischen dem Eingang und dem Ausgang des Ventilators (23) der Belüftungsvorrichtung (14) zu messen.

4. Belüftete Kabine (10) nach einem der vorstehenden Ansprüche, in welcher die Steuereinheit (30) fähig ist, um, wenn die gemessene Druckdifferenz (ΔPₘ) über einen vorgegebenen Variationsbereich hinaus bezogen auf einen Wert einer Referenzdruckdifferenz (ΔPₐ) variiert:
- die dem aktuellen Betriebszustand entsprechende charakteristische Kennlinie (Cⱼ) des Kreislaufs (24) zu definieren, die für die gemessene Druckdifferenz (ΔPₘ) einen theoretischen Durchfluss (Qvt) repräsentiert, der gleich dem Durchfluss ist, der durch die der aktuellen Drehzahl (Vₐ) entsprechende aktuelle Betriebskennline (Cᵥₐ) des Ventilators (23) für die gemessene Druckdifferenz (ΔPₘ) repräsentiert ist; dann
- die einer Zieldrehzahl (V_{b}) entsprechende Zielbetriebskennlinie (C_{vb}) des Ventilators (23) zu definieren, die für den Solldurchfluss (Qv_{c}) eine Zieldruckdifferenz (ΔP_{b}) repräsentiert, die gleich der Druckdifferenz ist, die durch die dem aktuellen Betriebszustand entsprechende aktualisierte charakteristische Kennlinie (Cⱼ) des Kreislaufs (24) für den Solldurchfluss (Qv_{c}) repräsentiert ist; dann
- den Wert der Referenzdruckdifferenz auf den Wert (ΔP_{b}) festzusetzen, der durch die Zielbetriebskennlinie (C_{vb}) des Ventilators (23) für die Zieldrehzahl (V_{b}) für den Solldurchfluss (Qv_{c}) repräsentiert ist; dann
- entsprechend der Zielbetriebskennlinie (C_{vb}) die aktuelle Drehzahl des Ventilators (23) auf die Zieldrehzahl (V_{b}) des Ventilators (23) festzusetzen.

5. Belüftete Kabine (10) nach einem der vorstehenden Ansprüche, in welcher der belüftete Raum (12) Teil eines Eisenbahnfahrzeugs ist.

6. Verfahren zum Belüften einer belüfteten Kabine (10), die einen belüfteten Innenraum (12) und eine Belüftungsvorrichtung (14) aufweist,
in welchem die belüftete Kabine (10) mindestens einen die Belüftungsvorrichtung (14) und den belüfteten Innenraum (12) durchquerenden, zur Schleife geschlossenen Luftkreislauf (24) aufweist, und in welchem die Belüftungsvorrichtung (14) einen Ventilator (23) zum Umwälzen der Luft in dem zur Schleife geschlossenen Luftkreislauf (24) aufweist,
und in welchen die Steuereinheit (30) einen Speicher aufweist, in dem gespeichert sind:
Betriebskennlinien des Ventilators (23), die die Druckdifferenz zwischen den selbigen zwei Messpunkten des zur Schleife geschlossenen Luftkreislaufs (24) als Funktion des Luftdurchflusses für unterschiedliche konstante Drehzahlen des Ventilators (23) repräsentieren, und
charakteristische Kennlinien des Kreislaufs (24), die die Druckdifferenz zwischen den selbigen zwei Messpunkten des zur Schleife geschlossenen Luftkreislaufs (24) als Funktion des von dem Ventilator (23) aufgezwungenen Luftdurchflusses für unterschiedliche Betriebszustände der Belüftungsvorrichtung (14) repräsentieren,
wobei das Verfahren die folgenden Schritte aufweist:
- Variieren lassen der Drehzahl des Ventilators (23), um ab einer die Drehzahl des Ventilators (23) steuernden Steuereinheit (30) einen konstanten Solldurchfluss (Qv_{c}) sicherzustellen,
**dadurch gekennzeichnet, dass** das Verfahren die folgenden Schritte aufweist:
- Messen einer Druckdifferenz (ΔPₘ) zwischen zwei Messpunkten des zur Schleife geschlossenen Luftkreislaufs (24); und
- Festsetzen der Drehzahl des Ventilators (23) als Funktion der gemessenen Druckdifferenz (ΔPₘ).

7. Verfahren zum Belüften nach Anspruch 6, **dadurch gekennzeichnet, dass**,
wenn die gemessene Druckdifferenz (ΔPₘ) über einen vorgegebenen Variationsbereich hinaus bezogen auf einen Wert einer Referenzdruckdifferenz (ΔPₐ) variiert, das Verfahren die Schritte aufweist:
- Definieren der dem aktuellen Betriebszustand entsprechenden charakteristische Kennlinie (Cⱼ) des Kreislaufs (24), die für die gemessene Druckdifferenz (ΔPₘ) einen theoretischen Durchfluss (Qvt) repräsentiert, der gleich dem Durchfluss ist, der durch die der aktuellen Drehzahl (Vₐ) entsprechenden aktuellen Betriebskennline (Cᵥₐ) des Ventilators (23) für die gemessene Druckdifferenz (ΔPₘ) wiederrepräsentiert ist; dann
- Definieren der einer Zieldrehzahl (V_{b}) entsprechenden Zielbetriebskennlinie (C_{vb}) des Ventilators (23), die für den Solldurchfluss (Qv_{c}) eine Zieldruckdifferenz (ΔP_{b}) repräsentiert, die gleich der Druckdifferenz ist, die durch die dem aktuellen Betriebszustand entsprechende aktualisierte charakteristische Kennlinie (Cⱼ) des Kreislaufs (24) für den Solldurchfluss (Qvc) repräsentiert ist; dann
- Festsetzen des Werts der Referenzdruckdifferenz auf den Wert (ΔP_{b}), der durch die Zielbetriebskennlinie (C_{vb}) des Ventilators (23) für die Zieldrehzahl (V_{b}) für den Solldurchfluss (Qv_{c}) repräsentiert ist; dann
- Festsetzen der aktuellen Drehzahl des Ventilators auf die Zieldrehzahl (V_{b}) entsprechend der Zielbetriebskennlinie (C_{vb}) des Ventilators (23).

## Claims

1. Ventilated cabin (10) including an interior ventilated space (12) and a ventilation device (14), in which the ventilated cabin (10) comprises at least one closed-loop air circuit (24) defined through the ventilation device (14) and the interior ventilated space (12) and in which the ventilation device (14) comprises a fan (23) for setting the air in motion in the closed-loop air circuit (24) and unit (30) for controlling the speed of the fan, the control unit (30) being capable of varying the speed of the fan (23) in order to provide a constant setpoint flow rate (Qv_{c}), **characterised in that** the ventilation device (14) comprises a sensor (34) for measuring a pressure difference (APₘ) between two measurement points of the closed-loop air circuit (24), the control unit (30) being able to fix the speed of the fan (23) as a function of the pressure difference measurement (APₘ)
and **in that** the control unit (30) comprises a memory storing curves of operation of the fan (23) giving the pressure difference between the same two measurement points of the closed-loop air circuit (24) as a function of the air flow different constant speeds of rotation of the fan (23) and characteristic curves of the circuit (24) giving the pressure difference between the same two measurement points of the closed-loop air circuit (24) as a function of the air flow rate imposed by the fan (23) for different operating states of the ventilation device (14).

2. Ventilated cabin (10) according to claim 1, wherein the ventilation device (14) comprises at least one filter (27) in the closed-loop air circuit (24).

3. Ventilated cabin (10) according to any one of the preceding claims, wherein the pressure difference measurement sensor (34) is able to measure this pressure difference (APₘ) between the inlet and the outlet of the fan (23) of the ventilation device (14).

4. Ventilated cabin (10) according to any one of the preceding claims, wherein the control unit (30) is able, when the measured pressure difference (APₘ) varies beyond a predetermined variation range from a reference pressure difference value (APₐ):
- defining the characteristic curve (Cⱼ) of the circuit (24) corresponding to the current operating state which, for the measured pressure difference (APₘ), gives a theoretical flow rate (Qvt) equal to the flow rate given by the current operating curve (Cᵥₐ) of the fan (23) corresponding to the current speed (Vₐ) for the measured pressure difference (APₘ); then
- defining the target operating curve (C_{vb}) of the fan (23) corresponding to a target speed (V_{b}) which, for the setpoint flow rate (Qv_{c}) gives a target pressure difference (ΔP_{b}) equal to the pressure difference given by the updated characteristic curve (Cⱼ) of the circuit (24) corresponding to the current operating state for the setpoint flow rate (Qv_{c}); then
- set the reference pressure difference value to the value (ΔP_{b}) given by the target operating curve (C_{vb}) of the fan (23) for the target speed (V_{b}) for the setpoint flow rate (Qv_{c}); then
- set the current rotational speed of the fan (23) to the target speed (V_{b}) corresponding to the target operating curve (C_{vb}) of the fan (23).

5. Ventilated cabin (10) according to any one of the preceding claims, wherein the ventilated space (12) forms part of a railway vehicle.

6. Method for ventilating a ventilated cabin (10) comprising an interior ventilated space (12) and a ventilation device (14), in which the ventilated cabin (10) comprises at least one closed-loop air circuit (24) defined through the ventilation device (14) and the interior ventilated space (12) and in which the ventilation device (14) comprises a fan (23) for setting the air in motion in the closed-loop air circuit (24), and wherein the control unit (30) comprises a memory storing curves of operation of the fan (23) giving the pressure difference between the same two measurement points of the closed-loop air circuit (24) as a function of the air flow for different constant speeds of rotation of the fan (23) and characteristic curves of the circuit (24) giving the pressure difference between the same two measurement points of the closed-loop air circuit (24) as a function of the air flow imposed by the fan (23) for different operating states of the ventilation device (14), the method comprising the steps of:
- varying the speed of the fan (23) in order to provide a constant setpoint flow rate (Qv_{c}) from a unit (30) for controlling the speed of the fan (23), **characterised in that** the method comprises the following steps:
- measuring a pressure difference (APₘ) between two measurement points of the closed-loop air circuit (24); and
- setting the speed of the fan (23) as a function of the pressure difference measurement (ΔPₘ).

7. Ventilation method according to claim 6, **characterised in that**, when the measured pressure difference (APₘ) varies beyond a predetermined variation range from a reference pressure difference value (ΔPₐ), the method comprises the steps of:
- defining the characteristic curve (Cⱼ) of the circuit (24) corresponding to the current operating state which, for the measured pressure difference (ΔPₘ), gives a theoretical flow rate (Qvt) equal to the flow rate given by the current operating curve (Cᵥₐ) of the fan (23) corresponding to the current speed (Vₐ) for the measured pressure difference (ΔPₘ); then
- defining the target operating curve (C_{vb}) of the fan (23) corresponding to a target speed (V_{b}) which, for the setpoint flow rate (Qv_{c}) gives a target pressure difference (ΔP_{b}) equal to the pressure difference given by the updated characteristic curve (Cⱼ) of the circuit (24) corresponding to the current operating state for the setpoint flow rate (Qv_{c}); then
- set the reference pressure difference value to the value (ΔP_{b}) given by the target operating curve (C_{vb}) of the fan (23) for the target speed (V_{b}) for the setpoint flow rate (Qv_{c}); then
- set the current rotational speed of the fan (23) to the target speed (V_{b}) corresponding to the target operating curve (C_{vb}) of the fan (23).
